# EUROPEAN PATENT SPECIFICATION

(11) **EP 4 081 430 B1**
(45) Date of publication and mention of the grant of the patent: **30.10.2024**
(21) Application number: 20824181.0
(22) Date of filing: 09.12.2020
(51) Int. Cl.: B60T 13/74, B60T 8/88, B60T 17/22

(54) **A BRAKE SYSTEM FOR A VEHICLE AND A CONTROL METHOD FOR THE BRAKE SYSTEM**
BREMSSYSTEM FÜR EIN FAHRZEUG UND STEUERUNGSVERFAHREN FÜR DAS BREMSSYSTEM
SYSTÈME DE FREIN POUR UN VÉHICULE ET PROCÉDÉ DE COMMANDE POUR LE SYSTÈME DE FREIN

(30) Priority: 24.12.2019 CN 201911345281
(43) Date of publication of application: 02.11.2022
(73) Proprietor: Haldex Aktiebolag, 261 24 Landskrona (SE)
(72) Inventor: NILSSON, Anders, Shanghai, 201804 (CN); RYLANDER, Christian, Shanghai, 201804 (CN); LINDQVIST, Anders, Shanghai, 201804 (CN); WANG, Zi, Shanghai, 201804 (CN)
(74) Representative: Müller Schupfner & Partner Patent- und Rechtsanwaltspartnerschaft mbB (Muc)
(86) International application number: PCT/EP2020/085258
(87) International publication number: WO 2021/130021

(56) References cited:
- US-A1- 2005 225 165
- US-A1- 2005 228 546
- US-A1- 2018 056 959

## Description

### TECHNICAL FIELD OF THE INVENTION

The present invention relates to a braking technology of a vehicle, and in particular to a high fault tolerance brake system for a vehicle, a control method for the brake system, and a computer readable medium.

### PRIOR ART

An electromechanical brake (EMB) system is an environment-friendly vehicle brake system with simple structure and fast response, which is one of the future development directions of braking technology.

Different from traditional brake system that uses gas or liquid as energy transfer medium, energy transmission and signal transmission of electromechanical brake system are realized in electric forms, whose brake energy comes from a battery or generator of a vehicle. The electric energy output from the battery or the generator is transmitted to an electric brake device provided on a wheel end to generate a braking force. The electric brake device may comprise a brake motor for generating a braking force, and a mechanical transmission mechanism driven by the brake motor. In a disc brake, the mechanical transmission mechanism finally generates a braking force by driving a caliper to clamp the brake disc.

The brake demand generated by a driver pressing a brake pedal is collected, processed, transmitted by means of electric signals, and finally reaches the electric brake devices. The electric brake devices drive the mechanical transmission mechanism by controlling the brake motor to rotate, thereby pushing the brake pads to be pressed or away from the brake disc in response to the braking demand.

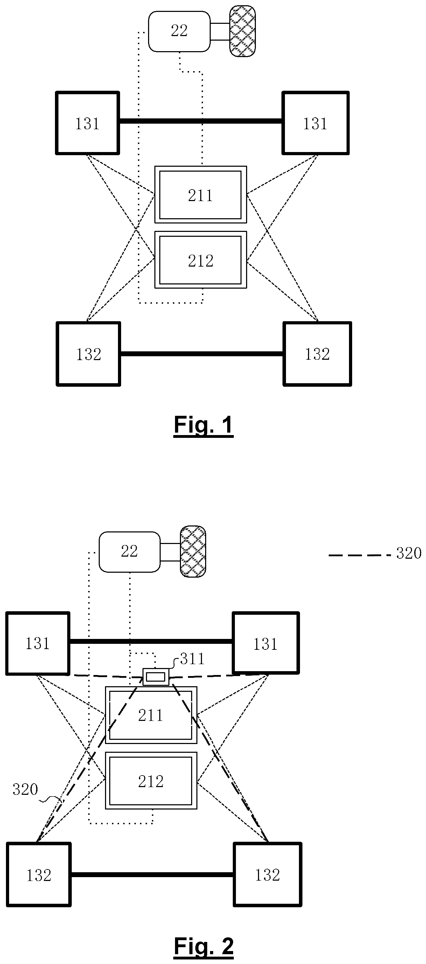

**Fig. 1** shows a schematic diagram of a conventional electromechanical brake system. As shown in Fig 1, the electromechanical brake system may comprise two redundant control modules 211-212. Each control module 211-212 may receive a brake demand from a brake demand input device 22, such as a brake pedal, and send a brake request to each of the electric brake devices 131-332 to generate a braking force consistent with the brake request. The control modules 211-212 are connected to electric brake devices 131-132 provided at each wheel end of the vehicle through a communication network, such as a controller area network (CAN). In the redundant system architecture, each of the electric brake devices 131-132 may respectively receive two brake requests from two control modules 211-212, so that the brake system may still be guaranteed to work when any one of the control modules 211-212 fails.

However, the accompanying problem is that when the two brake requests received by the electric brake devices 131-132 are inconsistent or even conflict with each other, the electric brake devices 131-132 may not be able to perform operations due to inability to determine the correctness of the brake requests.

The closest prior art document US 2018/0056959 A1 discloses a brake system for a vehicle comprising a plurality of electro-mechanical brake devices and a plurality of electronic brake system controllers which are located remotely from one another. For one embodiment a first controller controls a first group of electro-mechanical brake devices. A second controller controls a second group of electro-mechanical brake devices that exclude the electro-mechanical brake devices of the first group. For a different embodiment the two controllers are able to selectively operate in a split topology mode and a full topology mode based on diagnostic results generated by at least one of the controllers. When operating in the split topology mode a first controller controls a first group of brake devices whereas the second controller controls a second group of brake devices. Instead, when operating in the full topology mode, one of the controllers controls both the first group of brake devices and the second group of brake devices.

US 2005/0228546 A1 discloses a brake system for a vehicle controlled by use of three redundant controllers. Each of the controllers receives redundant control inputs from an input device as e.g. a steering actuator, an accelerator actuator or a brake actuator. The controllers receive both an unprocessed actuator sensor signal as well as a processed actuator sensor signal from the input device. The sensor signal which is used for the control may be determined by implementing a voting process which utilizes both the unprocessed sensor signals and the processed sensor signals. Representative signals are determined in each of the controllers and then compared for determining a resolved sensor signal or for determining a first representative differential, a second representative differential and a third representative differential which are then compared to a predetermined differential threshold. If the threshold is not exceeded, the resolved signal is calculated as the median value of the different representative differentials.

Also US 2005/0225165 A1 relates to the provision of redundancy in a brake system with electric brake devices.

### OBJECT OF THE INVENTION

It is the object of the present invention to
- overcome the shortcomings in the prior art and/or
- provide a high tolerance brake system of a vehicle and/or
- provide a high tolerance control method for a brake system and/or
- provide a computer readable medium for improving fault tolerance of the vehicle brake system.

### SOLUTION

According to the present invention, the object of the invention is solved by the features of the independent claims. Additional preferred embodiments according to the invention are to be seen in the dependent claims.

### DESCRIPTION OF THE INVENTION

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

The brake system for a vehicle according to the present invention comprises at least two control modules and an electric brake device provided on each wheel of the vehicle. Each of the electric brake devices receives brake requests from the at least two control modules generated in response to a brake demand to brake or release a corresponding wheel. The brake system further comprises a raw signal acquisition module for acquiring a raw signal indicating the brake demand and directly transmitting the raw signal to at least one of the electric brake devices for verifying the brake requests.

By setting the raw signal acquisition module, the electric brake device provided at each wheel end of the vehicle may be additionally provided with a raw signal indicating the brake demand of the vehicle. Since the raw signal bypasses the control modules, directly obtained from a brake demand input device such as a brake pedal or a non-human operating system or module and directly transmitted to the electric brake devices, the raw signal may reduce the possibility of similar faults with the control module, thereby providing additional reference information to the electric brake devices. Therefore, the electric brake devices may verify the credibility of each brake request according to the received raw signal, so that the electric brake devices may still perform operations consistent with the brake demand when a fault occurs in the brake system or the brake requests generated by the control modules are inconsistent, thereby improving fault tolerance of the system.

According to another aspect of the present invention, a control method for a brake system is also provided herein.

The control method for a brake system according to the present invention comprises steps: receiving, by a electric brake device provided on each wheel of the vehicle, brake requests from at least two control modules generated in response to a brake demand; and acquiring, by a raw signal acquisition module, a raw signal indicating the brake demand and directly transmitting the raw signal to at least one of the electric brake devices for verifying the brake requests.

The control method is configured to solve the problem of inconsistent redundant brake requests, thereby improving fault tolerance of the vehicle brake system. As described above, by acquiring the raw signal indicating the brake demand of the vehicle and transmitting them to the electric brake device provided at each wheel end of the vehicle, the electric brake devices are configured to verify the credibility of each brake request according to the received raw signal, so that the brake request consistent with the raw signal is followed when the brake requests generated by the redundant control modules are inconsistent with each other.

According to another aspect of the present invention, a computer readable medium is also provided herein.

The computer readable medium according to the present invention stores a computer instruction thereon. When the computer instruction is executed by a processor, the control method for the brake system is implemented to solve the problem of inconsistent redundant brake requests, thereby improving fault tolerance of the vehicle brake system.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

The above features and advantages of the present invention will be better understood after reading the detailed description of the embodiments of the present disclosure in conjunction with the following figures. In the figures, components are not necessarily drawn to scale, and components having similar related features may have the same or similar reference numerals.
- **Fig. 1**: shows a schematic diagram of a conventional electromechanical brake system.
- **Fig. 2**: shows a schematic diagram of a brake system for a vehicle according to an embodiment of the present invention.
- **Fig. 3**: shows a schematic diagram of brake requests received by each electric brake device according to an embodiment of the present invention.
- **Fig. 4**: shows a schematic diagram of a brake system for a vehicle according to an embodiment of the present invention.
- **Fig. 5**: shows a schematic diagram of a brake system for a vehicle according to an embodiment of the present invention.
- **Fig. 6**: shows a schematic flowchart of a control method for a brake system according to an embodiment of the present invention.
- **Fig. 7**: shows a schematic flowchart of braking or releasing a corresponding wheel according to the brake requests and the raw signal according to an embodiment of the present invention.

### DESCRIPTION OF THE DRAWINGS

The embodiments of the present invention are described in the following detailed description. Other advantages and effects of the present invention will be readily apparent to those skilled in the art from this disclosure. Although the description of the present invention will be described in conjunction with the preferred embodiments, this is not a limitation of the present invention. On the contrary, the invention is described in connection with the embodiments so as to cover other alternatives or modifications that are possible in the embodiments of the present invention. In order to provide a thorough understanding of the present invention, many specific details are included in the following description. The present invention may also be practiced without these details. In addition, some specific details are omitted in the description in order to avoid confusing or obscuring the present invention.

In order to overcome the shortcomings in the prior art, the present invention provides a high fault tolerance brake system for a vehicle, a control method for the brake system, and a computer readable medium for solving the problem of inconsistent redundant brake requests, thereby improving fault tolerance of the vehicle brake system.

Referring to **Fig. 2,** Fig. 2 shows a schematic diagram of a brake system for a vehicle according to an embodiment of the present invention.

As shown in Fig. 2, the brake system of a vehicle according to the embodiment may comprise two control modules 211-212, an electric brake device 131-132 provided on each wheel of the vehicle, and a raw signal acquisition module 311.

The control modules 211-212 may be two central controllers redundant with each other, configured to generate two independent brake requests according to a brake demand of the vehicle. The brake demand may be input by a driver through a brake pedal 22, a parking switch (not shown) and the like to the brake system of the vehicle for indicating the operation that needs the brake system to perform, such as providing braking force or performing parking, etc. The brake requests are generated by the control modules 211-212 after processing the received brake demand, which may comprise information for indicating the operations that need the electric brake devices to perform, such as providing a target braking force to a corresponding wheel or performing diagnosis, standby or other operations. In some embodiments, the target braking force may be characterized by parameters such as a clamping force of a caliper on the brake disc, a rotation angle of a brake motor, a thrust plate stroke or a brake pad stroke. Each of the electric brake devices 131-132 may perform corresponding operations to brake or release the wheel according to the target braking force indicated by the received brake request. Optionally, the brake request may be further provided with priority information indicating a priority. The control modules 211-212 may respectively send generated brake requests to each of the electric brake devices 131-132, so as to control the electric brake devices 131-132 to perform corresponding operations.

Each of the electric brake devices 131-132 may comprise a brake motor for generating a braking force according to the brake request, and a mechanical transmission mechanism driven by the brake motor. In response to receiving two independent brake requests sent by the control modules 211-212, when they are consistent, each of the electric brake devices 131-132 may control the brake motor to adjust the braking force provided to the corresponding wheel by adjusting the rotation angle of the brake motor, changing the stroke of the thrust plate or the brake pad, or changing the clamping force of the caliper on the brake disc. For example, when the target braking force indicated by the brake requests is 0, the electric brake devices 131-132 may release the corresponding wheels.

When the two independent brake requests are inconsistent, the raw signal acquisition module 311 may be configured to obtain a raw signal of a input device such as a brake pedal 22, a parking switch (not shown) or the like, and transmit the obtained raw signal to the electric brake devices 131-132 provided on each wheel of the vehicle, so that each of the electric brake devices 131-132 may verify the credibility of each received brake request according to the raw signal. The raw signal acquisition module 311 may comprise, but is not limited to, a chip and a circuit for implementing the above functions, which may be configured as a separately packaged electric module or be integrated in the control modules 211-212.

In one embodiment, the electric brake devices 131-132 provided on each wheel of the vehicle may specifically comprise two electric brake devices 131 respectively provided on a left wheel and a right wheel of the front axle of the vehicle, and two electric brake devices 132 respectively provided on a left wheel and a right wheel of the rear axle of the vehicle. The control modules 211-212 may respectively communicate with the electric brake devices 131-132 provided on each wheel of the vehicle through a communication network formed by a CAN bus. The raw signal acquisition module 311 may communicate with the electric brake devices 131-132 provided on each wheel of the vehicle through an independent communication network 320. The independent communication network 320 comprises, but is not limited to, a communication network composed of a CAN bus, a LIN bus, a FlexRay bus, or a MOST bus.

In one embodiment, in response to a brake demand input by a driver through a brake pedal 22, a parking switch (not shown) or the like, the two control modules 211-212 may respectively generate an independent brake request with priority information, and respectively send the generated brake request to the electric brake devices 131-132 provided on each wheel of the vehicle. Each of the electric brake devices 131-132 may read the priority information of the two brake requests, and judge the credibility of the brake requests according to the priority information. Specifically, for example, the priority may be determined by the operating status of the control modules 211-212, the rationality of the brake requests, the integrity of the communication network and / or the power supply network, and the like. When both brake requests have level 1 priority indicating the highest priority, they may have a same credibility. If the priority of any brake request is degraded, for example, it is degraded to level 2 indicating a lower priority, it may have a lower credibility. Each of the electric brake devices 131-132 may perform a corresponding operation according to a brake request with a higher priority.

In response to the priority information of the two brake requests being same, each of the electric brake devices 131-132 may further compare whether the two brake requests are same. Alternatively, the comparison order may also be comparing the brake request first, and then comparing the priority. Taking target braking force as an example, if the target braking forces indicated by the two braking requests are same, each of the electric brake devices 131-132 may drive the mechanical transmission mechanism to push the brake pads tightly or away from the brake disc to brake or release a corresponding wheel, according to the target braking force indicated by the brake requests.

Regarding the determination of priority, for example, the control module 211-212 may reduce the priority level of the brake request generated by itself, in response to a predefined error situation such as a loss of communication with an electric brake device 131 or 132, or a failure of its own power supply; a failure to process a brake demand or generate a brake request, that is, a loss of function integrity; and a failure to generate a reasonable brake request according to a brake demand.

However, if the control modules 211-212 are unable to properly reduce their priority levels, or the two control modules 211-212 reduce their brake requests to same priority, while the target braking forces indicated by the brake requests are different, each of the electric brake devices 131-132 may further verify the credibility of the two brake requests according to a raw signal transmitted by the raw signal acquisition module 311.

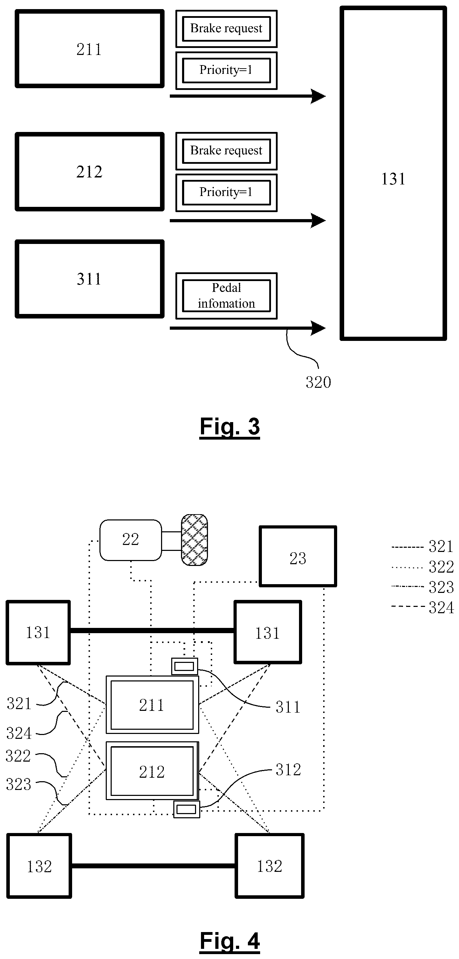

Referring to Fig. 2 and Fig. 3 in combination, Fig. 3 shows a schematic diagram of brake requests received by each electric brake device according to an embodiment of the present invention.

As shown in Fig. 3, each of the electric brake devices 131-132 may obtain the braking requests sent by the control modules 211-212 through the communication network. The brake requests may comprise information for instructing the operation of the electric brake devices 131-132, and may optionally comprise priority information for indicating their priorities.

At the same time, each of the electric brake devices 131-132 may also obtain the raw signal transmitted by the raw signal acquisition module 311 through an independent communication network 320. The raw signal may be a pedal displacement signal collected directly by the raw signal acquisition module 31 from the brake pedal 22 of the vehicle. The raw signal is not processed by the control modules 211-212, and is directly transmitted to each of the electric brake devices 131-132 through the independent communication network 320 by the raw signal acquisition module 311. Therefore, the raw signal will not be affected by the error conditions of the control modules 211-212, thereby providing credible reference information for the electric brake devices 131-132.

In addition to human operating input device such as the brake pedal 22 or the parking switch, the raw signal acquisition module 311 may also obtain raw signals from non-human operating systems or modules, such as an antilock brake system (ABS), an acceleration slip regulation (ASR) system, an autonomous emergency braking (AEB) system, and an unmanned driving system of the vehicle, thereby providing reference information from different sources for each of the electric brake devices 131-132, to improve scalability and fault tolerance of the brake system.

As an exemplary embodiment in which the electric brake device 131-132 utilizes the raw signal, the brake request generated by the control module 211 may instruct it to generate a target braking force in value of X, and the brake request generated by the control module 212 may instruct it to generate a target braking force in value of Y. The deviation between X and Y is larger than a reasonable error range. When the brake requests do not comprise priority information or have same priority level, the electric brake device 131 provided at the wheel end of the vehicle needs to read the raw signal transmitted by the raw signal acquisition module 311 to verify the two brake requests.

When the raw signal is a signal from the brake pedal 22, the raw signal may be a value obtained by a pedal sensor indicating the depth at which the driver depresses the brake pedal, such as an actual displacement position of the pedal, an actual displacement amount of the pedal, and a percentage of the total displacement of the pedal, etc. The electric brake device 131 may calculate the target braking force Z, indicated by the raw signal, according to a pre-stored corresponding relationship between the raw signal and the target braking force, such as a target braking force curve with the actual displacement or percentage of the pedal, and compare it with X and Y to verify their correctness, so as to make a judgment in an arbitration-like manner. The electric brake device 131 may follow the brake request consistent with Z or within a reasonable deviation range to brake a corresponding wheel.

Those skilled in the art may understand that the proposal using the signal from the brake pedal 22 as a raw signal is only a specific implementation embodiment of the present invention. In other embodiments, based on the concept of the present invention, the raw signal acquisition module 311 may also obtain the raw signal from a non-human operating system or module, and convert it into a dimension that can be compared with the brake requests generated by the control modules 211-212, in order to determine the brake request that matches the raw signal.

Those skilled in the art may also understand that the raw signal acquisition module 311, which communicates with the electric brake devices 131-132 provided on each wheel of the vehicle through an independent communication network 320, may provide a signal that is completely independent of other communication networks. However, the above proposal is only a specific embodiment of the present invention, mainly used to clearly show the concept of the present invention and provide a specific solution that is convenient for the public to implement, rather than limiting the scope of protection of the present invention. Other feasible solutions may further comprise that the raw signal acquisition module 311 may communicate with each of the electric brake devices 131-132 through a communication network of any control module 211-212, that is, the raw signal acquisition module 311 may share the communication network with the control module 211-212 to reduce system costs.

Referring to **Fig. 4**, Fig. 4 shows a schematic diagram of a brake system for a vehicle according to an embodiment of the present invention.

The brake system of the vehicle may comprise two raw signal acquisition modules 311-312. The two raw signal acquisition modules 311-312 may transmit raw signals in forms of independent communication networks in above embodiments, and may also respectively share the communication networks 321, 323 of the control modules 211-212 to communicate with the electric brake devices 131-132.

As shown in Fig. 4, in this embodiment, the brake system of the vehicle may comprise two raw signal acquisition modules 311-312 and further comprise a non-human operating system or module 23. The non-human operating system or module 23 comprises, but is not limited to, one or more of an antilock brake system (ABS), an acceleration slip regulation (ASR) system, an autonomous emergency braking (AEB) system and an unmanned driving system of the vehicle, and may automatically generate a brake demand without human operation.

The control module 211 may respectively communicate with two electric brake devices 131 provided on two front wheels of the vehicle through a communication network 321 formed by a CAN bus. The control module 211 may respectively communicate with two electric brake devices 132 provided on two rear wheels of the vehicle through a communication network 322. The raw signal acquisition module 311 may be provided in the communication network 321, configured to transmit a raw signal to the two electric brake devices 131 provided on the two front wheels of the vehicle.

The control module 212 may respectively communicate with two electric brake devices 132 provided on two rear wheels of the vehicle through a communication network 323 formed by a CAN bus. The control module 212 may respectively communicate with two electric brake devices 131 provided on two front wheels of the vehicle through a communication network 324. The raw signal acquisition module 312 may be provided in the communication network 323, configured to transmit a raw signal to the two electric brake devices 132 provided on the two rear wheels of the vehicle.

In response to the brake demand generated by the brake pedal 22 or the non-human operating system or module 23, the two control modules 211-212 may respectively generate an independent brake request. The control module 211 may respectively send the brake request, generated by it, to the electric brake devices 131 provided on the two front wheels of the vehicle through the communication network 321, and respectively send the brake request, generated by it, to the electric brake devices 132 provided on the two rear wheels of the vehicle through the communication network 322. The control module 212 may respectively send the brake request, generated by it, to the electric brake devices 131 provided on the two front wheels of the vehicle through the communication network 324, and respectively send the brake request, generated by it, to the electric brake devices 132 provided on the two rear wheels of the vehicle through the communication network 323.

In response to receiving the two independent brake requests sent by the control modules 211-212, when they are consistent, each of the electric brake devices 131-132 may control the brake motor to adjust the braking force provided to the corresponding wheel or perform other operations, in manners of adjusting the rotation angle of the brake motor, changing the stroke of the thrust plate or brake pads, and changing the clamping force of the caliper on the brake disc, etc. When the two independent brake requests are inconsistent, a correct brake request may be selected for following by referring to the manner in which the raw signal is used to verify it in the foregoing embodiment, and details are not described herein again.

In one embodiment, the brake requests may carry priority information. Each of the electric brake devices 131-132 may read the priority information of the two brake requests, and judge the credibility of the brake requests based on the priority information. Specifically, for example, the priority may be determined by the operating status of the control modules 211-212, the rationality of the brake requests, the integrity of the communication network and / or the power supply network, and the like. When both brake requests have level 1 priority, indicating the highest priority, they may have same credibility. If the priority of any brake request is degraded, for example, it is degraded to level 2 indicating a lower priority, it may have a lower credibility. Each of electric brake devices 131-132 may perform a corresponding operation according to the brake request with a higher priority.

The determination method of priority may be pre-stored in the control modules 211-212. Exemplarily, the control modules 211-212 may reduce their priorities to level 2, indicating slight errors, in response to a loss of communication with an electric brake device 131 or 132, or a failure of their own power supply, that is, the communication networks or power networks of the control modules 211-212 lose their integrity. The control modules 211-212 may reduce their priorities to level 3 indicating serious errors in response to a failure to process a brake demand or a failure to generate a brake request, that is, the function loses integrity. The control modules 211-212 may also lower their priorities in response to a predefined error condition such as a failure to generate a reasonable brake request based on a brake demand. It should be noted that the description of priority in the present invention is only used to clearly show the concept of the present invention, and is not intended to limit the present invention. Any number of priority settings greater than 2 levels may also be adopted in the present invention. The proposal of lowering priority may also be adjusted according to actual system requirements.

It can be understood that if the control modules 211-212 cannot properly reduce their own priority levels, or the two control modules 211-212 lower the brake requests generated by them to same priority, while the brake requests are different, each of the electric brake devices 131-132 may verify the credibility of the two brake requests according to the raw signals transmitted by the raw signal acquisition modules 311-312.

Specifically, the two electric brake devices 131 provided on the two front wheels of the vehicle may obtain the raw signals transmitted by the raw signal acquisition module 311 through the communication network 321. The two electric brake devices 132 provided on the two rear wheels of the vehicle may obtain the raw signals transmitted by the raw signal acquisition module 312 through the communication network 323. The raw signals may comprise signals generated by one or more of a vehicle brake pedal 22, a parking switch (not shown), and a non-human operating system or module 23. The raw signal is not processed by the control modules 211-212, but is transmitted by the raw signal acquisition module 311, 312 directly to the electric brake devices 131-132 through the communication networks 321, 323. Therefore, the raw pedal signal may not be affected by the error conditions of the control modules 211-212 to generate a consistent error.

In one embodiment, each of the electric brake devices 131-132 may store a correspondence relationship between the brake request and the raw signal. The correspondence may directly correlate the brake requests and the raw signals in different dimensions. Each of the electric brake devices 131-132 may not perform arithmetic processing on the raw signal, but obtain a reasonable range of the brake request corresponding to the raw signal according to the correspondence relationship, thereby verifying the brake request generated by the control module 211-212. As a result, the computing load of the electric brake devices 131-132 may be reduced, and the overall response speed may be improved.

Each of the electric brake devices 131-132 may further store an correction parameter indicating a correspondence relationship between the brake request and the raw signal. The correction parameter is based on, but is not limited to, a vehicle load condition and a road surface adhesion coefficient. The vehicle load condition comprise, but is not limited to, a load capacity, a total weight of passengers, or a load distribution of the vehicle. The purpose is that in response to different vehicle load conditions and road adhesion coefficients, reference brake requests corresponding to the raw signals collected by the raw signal acquisition modules 311-212 may deviate from actual brake requests generated by the control modules 211-212 after being processed by the correction parameter. Therefore, each of the electric brake devices 131-132 may use same operation or part of the operation of the control module 211-212 to process the raw signal to generate a brake request for comparison and verification with the brake requests generated by the control modules 211-212, which are more conducive to quick and accurate judgment. The vehicle load condition and the adhesion coefficient may be estimated by algorithms well known to those skilled in the art, and is not repeated here.

Specifically, when the control modules 211-212 of the brake system of the vehicle issue brake requests, they can appropriately adjust the brake requests sent to each of the electric brake devices 131-132 based on the reference brake request according to the load condition and the road adhesion coefficient of the vehicle. Each of the electric brake devices 131-132 may generate a brake request based on the load condition and / or the road adhesion coefficient of the vehicle received from the control modules 211-212, and the raw signals received from the raw signal acquisition modules 311-312. Each of the electric brake devices 131-132 may compare the generated brake request with the brake requests received directly from the control modules 211-212, thereby more accurately judging the accuracy of the generated brake request.

Optionally, in one embodiment, the raw signal acquisition module 311-312 may further comprise a signal conversion module (not shown). The signal conversion module may be configured to convert the collected raw signal into an information format conforming to the communication network protocols (e.g., CAN bus communication protocol) of each of the electric brake devices 131-132, so as to be compatible with the raw signals from different sources using different communication protocols, and reduce the computing load of the electric brake devices 131-132.

Those skilled in the art may understand that the brake system comprising only two control modules 211-212 is only a specific embodiment according to the present invention, mainly used to clearly show the concept of the present invention, and provide a specific proposal that is convenient for the public to implement, rather than to limit the scope of protection of the present invention. In other embodiments, for a multi-axle vehicle, the brake system of the vehicle may comprise three or more control modules corresponding to the axles and a raw signal acquisition module 311. The raw signal acquisition module 311 may be configured in a communication network between the control module and the electric brake devices, and communicates with each of the electric brake device through the communication network.

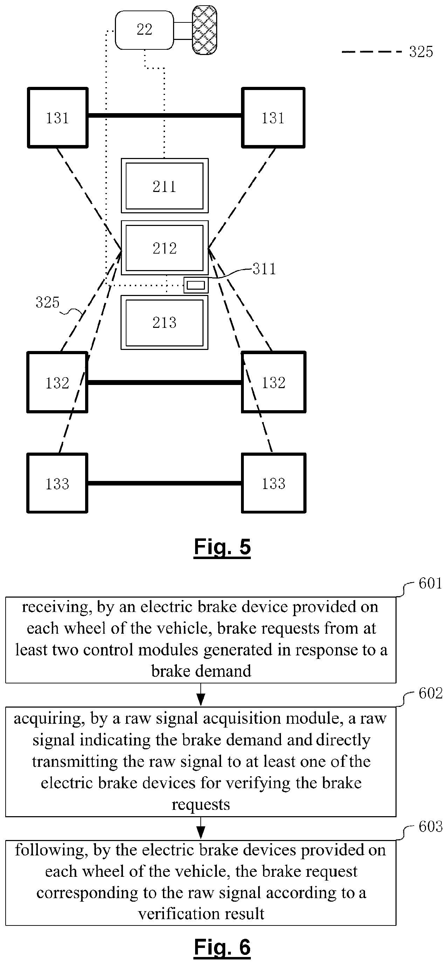

Referring to **Fig. 5**, Fig. 5 shows a schematic diagram of a brake system for a vehicle according to an embodiment of the present invention.

In the embodiment shown in Fig. 5, the control module 211 may respectively communicate with the electric brake devices 131-133 provided on each wheel of the vehicle through a corresponding communication network (not shown). The control module 212 may respectively communicate with the electric brake devices 131-133 provided on each wheel of the vehicle through the corresponding communication network 325. The control module 213 may communicate with the electric brake devices 131-133 provided on each wheel of the vehicle through a corresponding communication network (not shown). The raw signal acquisition module 311 may be provided in the communication network 325, configured to transmit raw signals to the electric brake devices 131-133 provided on each wheel of the vehicle.

In response to the brake demand input by a driver through a brake pedal 22, a parking switch (not shown) or other devices, the three control modules 211-213 may respectively generate an independent brake request, and respectively send the generated brake requests to the electric brake devices 131-133 provided on each wheel of the vehicle through corresponding communication networks. Optionally, the generated brake requests may be provided with priority information indicating the priority.

When the brake requests generated by the three control modules 211-213 are consistent, the electric brake devices 131-133 may perform operations according to the brake requests. When the three generated brake requests are not all consistent, the electric brake devices 131-133 may further refer to the raw signal transmitted by the raw signal acquisition module 311 to verify the brake requests.

When the brake requests are with priority information indicating the priority, each of the electric brake devices 131-133 may read the priority information of the three brake requests, and judge the credibility of the brake requests based on the priority information. Specifically, for example, the priority may be determined by the operating status of the control modules 211-213, the rationality of the brake requests, the integrity of the communication network and/or the power supply network, and the like. When the three brake requests all have level 1 priority indicating the highest priority, they have same credibility. If the priority of any brake request is degraded, for example, it is degraded to level 2 indicating a lower priority, it may have a lower credibility. Each of the electric brake devices 131-133 may perform a corresponding operation according to the brake request having a higher priority.

In response to the priority information of the three brake requests being same, each of the electric brake devices 131-133 may further determine whether the three brake requests are same. If the three brake requests are same, each of the electric brake devices 131-133 may drive the mechanical transmission mechanism to push the brake pads to be pressed or separated from the brake disc to brake or release corresponding wheels or perform corresponding operations according to the target braking force indicated by the brake requests.

If the priority information of the three brake requests is same, while the indicated target braking forces are different, an error condition occurred in the brake system is indicated. At this time, each of the electric brake devices 131-133 may verify the credibility of the three brake requests according to the raw signals transmitted by the raw signal acquisition module 311.

The raw signals are not processed by the control modules 211-213, and are transmitted, by the raw signal acquisition module 311, directly to the electric brake devices 131-133 through the communication network 325. Therefore, the raw signals may not be affected by the error conditions of the control modules 211-213 to produce a consistent error.

Each of the electric brake devices 131-133 may store a corresponding relationship between the brake request and the raw signal. The corresponding relationship may directly correlate the brake requests and the raw signals with different dimensions. Each of the electric brake devices 131-133 may not perform arithmetic processing on the raw signal, but may obtain a reasonable range of the brake requests corresponding to the raw signal according to the corresponding relationship, thereby verifying the correctness of the brake requests generated by the control modules 211-213. As a result, the computing load of the electric brake devices 131-133 may be reduced, and the overall response speed may be improved.

Optionally, based on any of the above embodiments, the raw signal acquisition module may further comprise a power management module (not shown). The power management module may be configured to manage the power supply of each of the electric brake devices.

Specifically, the power management module may keep the switch, supplying power to the electric brake devices, in an open state when one or more of the control modules fail to guarantee the power supply of the electric brake devices, thereby ensuring that the power supply circuit of the electric brake devices may be turned on. The power management module may further manage the power supply of the electric brake devices, such as a vehicle battery or an independent power supply of the brake system. For example, the power management module may transmit a power supply signal to the vehicle battery to power the electric brake devices or charge the independent power supply of the brake system, thereby ensuring the energy source of the electric brake devices.

Those skilled in the art may understand that although the control modules 211-213 described in the above embodiments can be implemented by a combination of software and hardware. In other embodiments, the control modules 211-213 may also be implemented by software or hardware separately. For hardware implementation, the control modules 211-213 may be used in one or more application-specific integrated circuits (ASIC), digital signal processors (DSP), programmable logic devices (PLD), field programmable gate arrays (FPGA), processors, controllers, microcontrollers, microprocessors, other electronic devices for performing the above functions, or a selected combination of the above devices. For software implementation, the control modules 211-213 may be implemented by independent software modules such as procedures and functions running on a general-purpose chip, where each module may perform one or more of the functions and operations described herein.

According to another aspect of the present invention, an embodiment of a control method for a brake system is also provided herein.

Referring to Fig. 6, Fig. 6 shows a schematic flowchart of a control method for a brake system according to an embodiment of the present invention, comprising steps:
601: receiving, by an electric brake device provided on each wheel of the vehicle, brake requests from at least two control modules generated in response to a brake demand;
602: acquiring, by a raw signal acquisition module, a raw signal indicating the brake demand and directly transmitting the raw signal to at least one of the electric brake devices for verifying the brake requests; and
603: following, by the electric brake devices provided on each wheel of the vehicle, the brake request corresponding to the raw signal according to a verification result.

Optionally, the brake requests generated by the at least two control modules may comprise information for indicating operations required to be performed by each electric brake device. Optionally, the brake requests may comprise priority information for indicating the priority. Each electric brake device may read the priority information in each brake request to verify the credibility of the brake request.

Specifically, in response to the brake requests generated by the at least two control modules having different priorities, the electric brake device provided on each wheel of the vehicle may follow the brake request having a higher priority. In response to inconsistent brake requests, generated by at least two control modules, without priority or with same priority, each electric brake device may verify the brake requests based on the raw signal.

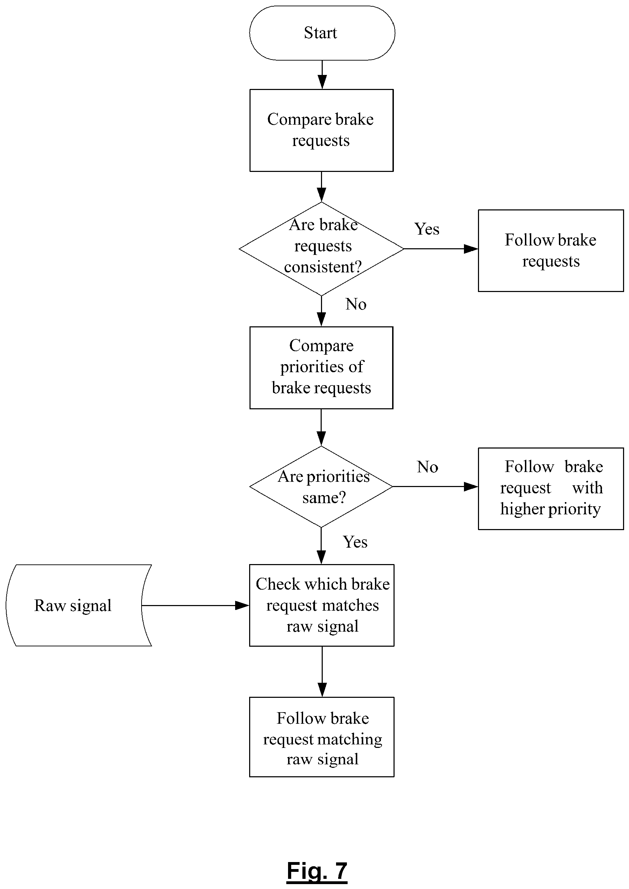

Referring to **Fig. 7**, Fig. 7 shows a schematic flowchart of braking or releasing a corresponding wheel according to the brake request and the raw signal according to an embodiment of the present invention.

As shown in Fig. 7, in response to the brake requests generated by at least two control modules, each electric brake device may first determine whether the brake requests are consistent. In the case of consistency, each electric brake device may follow the brake requests. In the case of inconsistency, each electric brake device may compare the priorities of the brake requests. If the priorities are different, the brake request with higher priority may be followed. If the priorities are same, the brake requests may be verified by virtue of the raw signal collected by the raw signal acquisition module. The brake request corresponding to the raw signal may be determined and followed. Exemplarily, the raw signal may be a pedal displacement signal collected directly from the brake pedal of the vehicle by the raw signal acquisition module.

Those skilled in the art may understand that the control method of the brake system of the vehicle provided in this embodiment may be implemented by a brake system independently or in cooperation with a vehicle control unit (VCU) or an on-board computer of the vehicle. Optionally, in some embodiments, the control method of the brake system of the vehicle may further comprise corresponding implementation steps for the vehicle brake systems provided in different embodiments described above, so as to obtain corresponding technical effects, which are not described herein again.

According to another aspect of the present invention, an embodiment of a computer-readable medium is also provided herein.

The computer-readable medium provided in this embodiment stores computer instructions thereon. When the computer instructions are executed by a processor, the control method of the brake system provided by any of the above embodiments is implemented to solve the problem of inconsistent redundant brake requests, thereby improving the fault tolerance of the vehicle brake system.

Those skilled in the art may understand that the various illustrative logic blocks, modules, circuits, and algorithm steps described in connection with the embodiments disclosed herein may be implemented as electronic hardware, computer software, or a combination of the two. To clearly illustrate the interchange ability of hardware and software, various illustrative components, blocks, modules, circuits, and steps have been described above generally in functional form. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Various illustrative logic modules and circuits described in connection with the embodiments disclosed herein may be used with a general purpose processor, digital signal processor (DSP), application specific integrated circuit (ASIC), field programmable gate array (FPGA), or other programmable logic devices, discrete gate or transistor logic, discrete hardware components, or any combination thereof designed to perform the functions described herein are implemented or performed. The general-purpose processor may be a microprocessor, but in the alternative, the processor may be any conventional processor, controller, microcontroller, or state machine. The processor may also be implemented as a combination of computing devices, such as a combination of a DSP and a microprocessor, a plurality of microprocessors, one or more microprocessors in cooperation with a DSP core, or any other such configuration.

The steps of a method or algorithm described in connection with the embodiments disclosed herein may be embodied directly in hardware, in a software module executed by a processor, or in a combination of the two. The software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The inventive control method preferably comprises one, any number and any combination or all of the following method steps a) to I):
a) Each of the brake requests might have a priority, in response to the brake requests generated by the at least two control modules (211, 212, 213) being different while having same priority, executing, by the electric brake devices (131, 132), one of the brake requests consistent with the raw signal.
b) The control method might further comprise the step of transmitting, by the raw signal acquisition module (311), the raw signal to each of the electric brake devices (131, 132) via an independent communication network (320); or transmitting, by the raw signal acquisition module (311), the raw signal to each of the electric brake devices (131, 132) via a communication network (325) of any one of the control modules (211, 212, 213).
c) The at least two control modules might comprise a first control module (211) and a second control module (212) and the step of transmitting, by a first raw signal acquisition module (311) disposed in a communication network (321) in which a first control module (211) communicates with a portion of the electric brake devices (131), the raw signal to the portion of the electric brake devices (131); and transmitting, by a second raw signal acquisition module (312) disposed in a communication network (323) in which a second control module (212) communicates with remaining portion of the electric brake devices (132), the raw signal to the remaining portion of the electric brake devices (132).
d) The electric brake devices (131, 132) might verify the received brake requests according to a stored correspondence between the brake request and the raw signal, and follow the brake request consistent with the raw signal.
e) The control method might further comprise the step of processing the raw signal, by the electric brake devices (131, 132), according to a stored correction parameter indicating a correspondence between the brake request and the raw signal to generate a brake request for verification, wherein the correction parameter is based on a vehicle load condition and / or an adhesion coefficient.
f) The step of following the brake request consistent with the raw signal might further comprise braking or releasing, by the electric brake devices (131, 132), the corresponding wheel according to a target braking force indicated by the brake request consistent with the raw signal.
g) The control method might comprises the step of in response to the brake requests generated by the at least two control modules (211, 212, 213) having different priorities, following, by the electric brake device (131, 132), the brake request with a higher priority.
h) The control method might further comprise differentiating the priority into at least two levels according to the credibility of the brake requests.
i) The step of differentiating the priority into at least two levels according to the credibility of the brake requests might further comprise reducing the level of the priority of the control module in response to one of following conditions:
   - the communication network (321, 322, 323, 324) and/or power network of the control module (211, 212) loses integrity;
   - a function of the control module (211, 212) loses integrity; and
   - the control module (211, 212) is unable to generate a reasonable brake request.
j) The control method might also comprise the step that the raw signal is generated by one or more of a brake pedal (22), a parking switch and a non-human operating system or module (23) of the vehicle.
k) The control method might further comprise converting, by a signal conversion module of the raw signal acquisition module (311, 312), the raw signal into information conforming to a communication network protocol of the electric brake device (131, 132).
l) The control method might further comprise managing, by a power management module of the raw signal acquisition module (311), power supply of the electric brake device (131, 132).

The previous description of the disclosure is provided to enable any person skilled in the art to make or use the disclosure.

### LIST OF REFERENCE NUMERALS

- 11: battery of a vehicle
- 12: ultra-capacitor module
- 131: electric brake device
- 132: electric brake device
- 133: electric brake device
- 211: control module
- 212: control module
- 213: control module
- 22: brake pedal
- 23: non-human operating system or module
- 311: raw signal acquisition module
- 312: raw signal acquisition module
- 320: communication network
- 321: communication network
- 322: communication network
- 323: communication network
- 324: communication network
- 325: communication network
- 601: step
- 602: step
- 603: step

## Claims

1. A brake system for a vehicle, comprising at least two control modules (211, 212, 213) and an electric brake device (131, 132) provided on each wheel of the vehicle,
wherein each of the electric brake devices (131, 132) receives brake requests from the at least two control modules (211, 212, 213) generated in response to a brake demand to brake or release a corresponding wheel,
**characterized in that** the brake system further comprises a raw signal acquisition module (311, 312) for acquiring a raw signal indicating the brake demand and directly transmitting the raw signal to at least one of the electric brake devices (131, 132) for verifying the brake requests.

2. The brake system of claim 1, **characterized in that** each of the brake requests has a priority,
wherein in response to the brake requests generated by the at least two control modules (211, 212, 213) being different while having same priority, the electric brake devices (131, 132) follow one of the brake requests which is consistent with the raw signal.

3. The brake system of claim 1 or 2, **characterized in that** the raw signal acquisition module (311) is communicatively connected to each of the electric brake devices (131, 132) via an independent communication network (320); or
the raw signal acquisition module (311) is communicatively connected to each of the electric brake devices (131, 132) via a communication network (325) of any one of the control modules (211, 212, 213).

4. The brake system of claim 1 or 2, **characterized in that** the at least two control modules comprise a first control module (211) and a second control module (212), the brake system further comprises a first raw signal acquisition module (311) of the plurality of the raw signal acquisition modules, disposed in a communication network (321) in which a first control module (211) communicates with a portion of the electric brake devices (131), which is configured to transmit the raw signal to the portion of the electric brake devices (131); and
a second raw signal acquisition module (312) of the plurality of the raw signal acquisition modules, disposed in a communication network (323) in which a second control module (212) communicates with remaining portion of the electric brake devices (132), which is configured to transmit the raw signal to the remaining portion of the electric brake devices (132).

5. The brake system of one of claims 1 to 4, **characterized in that** the electric brake devices (131, 132) store a correspondence between the brake requests and the raw signal,
wherein in response to one of received brake requests and received raw signal conforming to the correspondence, the electric brake devices follow the received brake request consistent with the received raw signal.

6. The brake system of claim 5, **characterized in that** the electric brake devices (131, 132) further store an correction parameter indicating a correspondence between the brake request and the raw signal, wherein the correction parameter is based on a vehicle load condition and / or an adhesion coefficient, configured to generate the brake request for verification.

7. The brake system of claim 5, **characterized in that** the brake requests indicate a target braking force that is required to be provided by the electric brake devices (131, 132),
wherein the electric brake devices (131, 132) brake or release the corresponding wheel according to the target braking force indicated by the brake request consistent with the raw signal.

8. The brake system of one of claims 2 to 7, **characterized in that** in response to the brake requests generated by the at least two control modules (211, 212, 213) having different priorities, the electric brake device (131, 132) provided on each wheel of the vehicle follows the brake request with a higher priority.

9. The brake system of claim 8, **characterized in that** the priority comprises at least two levels associated with credibility of the brake request.

10. The brake system of claim 9, **characterized in that** the control module (211, 212) reduces the level of the priority in response to one of following conditions:
the communication network (321, 322, 323, 324) and/or power network of the control module (211, 212) loses integrity;
a function of the control module (211, 212) loses integrity; and
the control module (211, 212) is unable to generate a reasonable brake request according to a brake demand.

11. The brake system of one of claims 1 to 10, **characterized in that** the raw signal comprises signals generated by one or more of a brake pedal (22), a parking switch and a non-human operating system or module (23) of the vehicle.

12. The brake system of one of claims 1 to 11, **characterized in that** the raw signal acquisition module (311, 312) further comprises a signal conversion module,
wherein the signal conversion module is configured to convert the raw signal into information conforming to a communication network protocol of the electric brake device (131, 132).

13. The brake system of one of claims 1 to 12, **characterized in that** the raw signal acquisition module (311) further comprises a power management module, the power management module is configured to manage power supply of the electric braking device (131, 132).

14. A control method for a brake system, **characterized in that** it comprises:
receiving, by an electric brake device (131, 132) provided on each wheel of the vehicle, brake requests from at least two control modules (211, 212, 213) generated in response to a brake demand; and
acquiring, by a raw signal acquisition module (311, 312), a raw signal indicating the brake demand and directly transmitting the raw signal to at least one of the electric brake devices (131, 132) for verifying the brake requests.

15. A computer readable medium, **characterized in that** the computer readable medium stores a computer instruction thereon,
wherein the computer instruction implement the control method for a brake system of claim 14 when executed by a processor.

## Patentansprüche

1. Bremssystem für ein Fahrzeug, umfassend mindestens zwei Steuermodule (211, 212, 213) und eine elektrische Bremsvorrichtung (131, 132), die an jedem Rad des Fahrzeugs vorgesehen ist/sind, wobei jede der elektrischen Bremsvorrichtungen (131, 132) Bremsanforderungen von den mindestens zwei Steuermodulen (211, 212, 213) empfängt die als Reaktion auf eine Bremsanforderung zum Abbremsen oder Lösen eines entsprechenden Rades erzeugt werden, **dadurch gekennzeichnet, dass**
das Bremssystem ferner ein Rohsignal-Beschaffungsmodul (311, 312) zum Erfassen eines Rohsignals, das die Bremsanforderung anzeigt, und zum direkten Übertragen des Rohsignals an mindestens eine der elektrischen Bremsvorrichtungen (131, 132) zum Verifizieren der Bremsanforderungen umfasst.

2. Bremssystem nach Anspruch 1, **dadurch gekennzeichnet, dass** jede der Bremsanforderungen eine Priorität hat, wobei als Reaktion auf die von den mindestens zwei Steuermodulen (211, 212, 213) erzeugten Bremsanforderungen, die unterschiedlich sind, aber die gleiche Priorität haben, die elektrischen Bremsvorrichtungen (131, 132) einer der Bremsanforderungen folgen, die mit dem Rohsignal konsistent ist.

3. Bremssystem nach Anspruch 1 oder 2, **dadurch gekennzeichnet, dass** das Modul zur Beschaffung von Rohsignalen (311) über ein unabhängiges Kommunikationsnetzwerk (320) mit jeder der elektrischen Bremsen (131, 132) kommunikativ verbunden ist; oder dass das Modul zur Beschaffung von Rohsignalen (311) über ein Kommunikationsnetzwerk (325) eines der Steuermodule (211, 212, 213) mit jeder der elektrischen Bremsen (131, 132) kommunikativ verbunden ist.

4. Bremssystem nach Anspruch 1 oder 2, **dadurch gekennzeichnet, dass** die mindestens zwei Steuermodule ein erstes Steuermodul (211) und ein zweites Steuermodul (212) umfassen, wobei das Bremssystem ferner ein erstes Rohsignal-Erfassungsmodul (311) der Mehrzahl der Rohsignal-Erfassungsmodule umfasst, das in einem Kommunikationsnetzwerk (321) angeordnet ist, in dem ein erstes Steuermodul (211) mit einem Teil der elektrischen Bremsvorrichtungen (131) kommuniziert, das so ausgestaltet ist, dass es das Rohsignal an den Teil der elektrischen Bremsvorrichtungen (131) übermittelt; und ein zweites Rohsignal-Beschaffungsmodul (312) aus der Vielzahl der Rohsignal-Beschaffungsmodule, das in einem Kommunikationsnetzwerk (323) angeordnet ist, in dem ein zweites Steuermodul (212) mit einem verbleibenden Teil der elektrischen Bremsvorrichtungen (132) kommuniziert, das ausgestaltet ist, um das Rohsignal an den verbleibenden Teil der elektrischen Bremsvorrichtungen (132) zu übertragen.

5. Bremssystem nach einem der Ansprüche 1 bis 4, **dadurch gekennzeichnet, dass** die elektrischen Bremsvorrichtungen (131, 132) eine Korrespondenz zwischen den Bremsanforderungen und dem Rohsignal speichern, wobei die elektrischen Bremsvorrichtungen als Reaktion auf eine der empfangenen Bremsanforderungen und des empfangenen Rohsignals, die der Korrespondenz entsprechen, der empfangenen Bremsanforderung in Übereinstimmung mit dem empfangenen Rohsignal folgen.

6. Bremssystem nach Anspruch 5, **dadurch gekennzeichnet, dass** die elektrischen Bremsvorrichtungen (131, 132) ferner einen Korrekturparameter speichern, der eine Übereinstimmung zwischen der Bremsanforderung und dem Rohsignal angibt, wobei der Korrekturparameter auf einem Fahrzeug-Ladezustand und/oder einem Adhäsionskoeffizienten basiert, der so ausgestaltet ist, dass er die Bremsanforderung zur Überprüfung erzeugt.

7. Bremssystem nach Anspruch 5, **dadurch gekennzeichnet, dass** die Bremsanforderungen eine Zielbremskraft angeben, die von den elektrischen Bremsvorrichtungen (131, 132) bereitgestellt werden muss, wobei die elektrischen Bremsvorrichtungen (131, 132) das entsprechende Rad entsprechend der durch die Bremsanforderung angegebenen Zielbremskraft in Übereinstimmung mit dem Rohsignal bremsen oder lösen.

8. Bremssystem nach einem der Ansprüche 2 bis 7, **dadurch gekennzeichnet, dass** die an jedem Rad des Fahrzeugs vorgesehene elektrische Bremseinrichtung (131, 132) in Reaktion auf die von den mindestens zwei Steuermodulen (211, 212, 213) erzeugten Bremsanforderungen mit unterschiedlicher Priorität der Bremsanforderung mit höherer Priorität folgt.

9. Bremssystem nach Anspruch 8, **dadurch gekennzeichnet, dass** die Priorität mindestens zwei die mit der Wertigkeit der Bremsenanforderung verbunden sind.

10. Bremssystem nach Anspruch 9, **dadurch gekennzeichnet, dass** das Steuermodul (211, 212) das Niveau der Priorität als Reaktion auf eine der folgenden Bedingungen reduziert: das Kommunikationsnetz (321, 322, 323, 324) und/oder das Stromnetz des Steuermoduls (211, 212) verliert an Integrität; eine Funktion des Steuermoduls (211, 212) verliert an Integrität; und das Steuermodul (211, 212) ist nicht in der Lage, eine angemessene Bremsanforderung gemäß einer Bremsanforderung zu erzeugen.

11. Bremssystem nach einem der Ansprüche 1 bis 10, **dadurch gekennzeichnet, dass** das Rohsignal Signale umfasst, die von einem oder mehreren von einem Bremspedal (22), einem Parkschalter und einem nicht-menschlichen Bediensystem oder -modul (23) des Fahrzeugs erzeugt werden.

12. Bremssystem nach einem der Ansprüche 1 bis 11, **dadurch gekennzeichnet, dass** das Rohsignal-Beschaffungsmodul (311, 312) ferner ein Signalumwandlungsmodul umfasst, wobei das Signalumwandlungsmodul so ausgestaltet ist, dass es das Rohsignal in Informationen umwandelt, die einem Kommunikationsnetzwerkprotokoll der elektrischen Bremsvorrichtung (131, 132) entsprechen.

13. Bremssystem nach einem der Ansprüche 1 bis 12, **dadurch gekennzeichnet, dass** das Modul zur Beschaffung von Rohsignalen (311) ferner ein Energiemanagementmodul umfasst, wobei das Energiemanagementmodul so ausgestaltet ist, dass es die Energieversorgung der elektrischen Bremsvorrichtung (131, 132) verwaltet.

14. Verfahren zum Steuern eines Bremssystems, **dadurch gekennzeichnet, dass** es Folgendes umfasst: Empfangen durch eine elektrische Bremsvorrichtung (131, 132), die an jedem Rad des Fahrzeugs vorgesehen ist, von Bremsanforderungen von mindestens zwei Steuermodulen (211, 212, 213), die als Reaktion auf eine Bremsanforderung erzeugt werden; und Erfassen eines Rohsignals, durch ein Rohsignal-Erfassungsmodul (311, 312), das die Bremsanforderung anzeigt und direktes Übertragen des Rohsignals an mindestens eine der elektrischen Bremsvorrichtungen (131, 132) zum Verifizieren der Bremsanforderungen.

15. Computerlesbares Medium, **dadurch gekennzeichnet, dass** das computerlesbare Medium einen Computerbefehl darauf speichert, wobei der Computerbefehl das Verfahren zum Steuern eines Bremssystems nach Anspruch 14 implementiert, wenn er von einem Prozessor ausgeführt wird.

## Revendications

1. Système de freins pour un véhicule, comprenant au moins deux modules de commande (211, 212, 213) et un dispositif de frein électrique (131, 132) prévu sur chaque roue du véhicule,
dans lequel chacun des dispositifs de freins électriques (131, 132) reçoit des requêtes de freinage depuis lesdits au moins deux modules de commande (211, 212, 213) générées en réponse à une demande de freinage pour freiner ou libérer une roue correspondante,
**caractérisé en ce que** le système de freins comprend en outre un module d'acquisition de signal brut (311, 312) destiné à acquérir un signal brut indiquant la demande de freinage et à transmettre directement le signal brut à l'un au moins des dispositifs de freins électriques (131, 132) pour vérifier les requêtes de freinage.

2. Système de freins selon la revendication 1, caractérisé en ce chacune des requêtes de freinage a une priorité,
dans lequel, en réponse aux requêtes de freinage générées par lesdits au moins deux modules de commande (211, 212, 213) qui sont différentes tout en ayant la même priorité, les dispositifs de freins électriques (131, 132) suivent l'une des requêtes de freinage qui est en accord avec le signal brut.

3. Système de freins selon la revendication 1 ou 2, **caractérisé en ce que** le module d'acquisition de signal brut (311) est connecté en communication à chacun des dispositifs de freins électriques (131, 132) via un réseau de communication indépendant (320) ; ou
le module d'acquisition de signal brut (311) est connecté en communication à chacun des dispositifs de freins électriques (131, 132) via un réseau de communication (325) de l'un quelconque des modules de commande (211, 212, 213).

4. Système de freins selon la revendication 1 ou 2, **caractérisé en ce que** lesdits au moins deux modules de commande comprennent un premier module de commande (211) et un second module de commande (212), le système de freins comprenant en outre un premier module d'acquisition de signal brut (311) de la pluralité de modules d'acquisition de signaux bruts, disposé dans un réseau de communication (321) dans lequel un premier module de commande (211) communique avec une portion des dispositifs de freins électriques (131), qui est configuré pour transmettre le signal brut à la portion des dispositifs de freins électriques (131) ; et
un second module d'acquisition de signal brut (312) de la pluralité de modules d'acquisition de signaux bruts, disposé dans un réseau de communication (323) dans lequel un second module de commande (212) communique avec une portion restante des dispositifs de freins électriques (132), qui est configuré pour transmettre le signal brut à la portion restante des dispositifs de freins électriques (132).

5. Système de freins selon l'une des revendications 1 à 4, **caractérisé en ce que** les dispositifs de freins électriques (131, 132) stockent une correspondance entre les requêtes de freinage et le signal brut,
dans lequel, en réponse à un élément parmi les requêtes de freinage reçues et le signal brut reçu conformément à la correspondance, les dispositifs de freins électriques suivent la requête de freinage reçue en accord avec le signal brut reçu.

6. Système de freins selon la revendication 5, **caractérisé en ce que** les dispositifs de freins électriques (131, 132) stockent en outre un paramètre de correction indiquant une correspondance entre la requête de freinage et le signal brut, dans lequel le paramètre de correction est basé sur une condition de charge de véhicule et/ou un coefficient d'adhérence, configuré pour générer la requête de freinage pour vérification.

7. Système de freins selon la revendication 5, caractérisé en que les requêtes de freinage indiquent une force de freinage cible qui est requise pour être fournie par les dispositifs de freins électriques (131, 132),
dans lequel les dispositifs de freins électriques (131, 132) freinent ou libèrent la roue correspondante selon la force de freinage cible indiquée par la requête de freinage en accord avec le signal brut.

8. Système de freins selon l'une des revendications 2 à 7, **caractérisé en ce que**, en réponse aux requêtes de freinage générées par lesdits au moins deux modules de commande (211, 212, 213) ayant des priorités différentes, le dispositif de frein électrique (131, 132) prévu sur chaque roue du véhicule suit la requête de freinage avec une priorité plus élevée.

9. Système de freins selon la revendication 8, **caractérisé en ce que** la priorité comprend au moins deux niveaux associés à une plausibilité de la requête de freinage.

10. Système de freins selon la revendication 9, **caractérisé en ce que** le module de commande (211, 212) réduit le niveau de la priorité en réponse à l'une des conditions suivantes :
le réseau de communication (321, 322, 323, 324) et/ou un réseau de puissance du module de commande (211, 212) perdent en intégrité ;
une fonction du module de commande (211, 212) perd en intégrité ; et
le module de commande (211, 212) est incapable de générer une requête de freinage raisonnable selon une demande de freinage.

11. Système de freins selon l'une des revendications 1 à 10, **caractérisé en ce que** le signal brut comprend des signaux générés par un ou plusieurs éléments parmi une pédale de frein (22), un interrupteur de stationnement et un système ou module de fonctionnement non humain (23) du véhicule.

12. Système de freins selon l'une des revendications 1 à 11, **caractérisé en ce que** le module d'acquisition de signal brut (311, 312) comprend en outre un module de conversion de signal,
dans lequel le module de conversion de signal est configuré pour convertir le signal brut en informations conformément à un protocole de réseau de communication du dispositif de frein électrique (131, 132).

13. Système de freins selon l'une des revendications 1 à 12, **caractérisé en ce que** le module d'acquisition de signal brut (311) comprend en outre un module de gestion de puissance, le module de gestion de puissance étant configuré pour gérer une alimentation de puissance de dispositif de frein électrique (131, 132).

14. Procédé de commande pour un système de freins, **caractérisé en ce qu'**il comprend les étapes consistant à :
recevoir, via un dispositif de frein électrique (131, 132) prévu sur chaque roue du véhicule, des requêtes de freinage depuis au moins deux modules de commande (211, 212, 213) générées en réponse à une demande de freinage ; et
acquérir, via un module d'acquisition de signal brut (311, 312), un signal brut indiquant la demande de freinage et transmettre directement le signal brut à l'un au moins des dispositifs de freins électriques (131, 132) pour vérifier les requêtes de freinage.

15. Support lisible par ordinateur, **caractérisé en ce que** le support lisible par ordinateur stocke une instruction d'ordinateur sur celui-ci,
dans lequel l'instruction d'ordinateur met en oeuvre le procédé de commande pour un système de freins selon la revendication 14, quand elle est exécutée par un processeur.
